# FASCICULE DE BREVET EUROPEEN

(11) **EP 2 394 735 B1**
(45) Date de publication et mention de la délivrance du brevet: **09.01.2013**
(21) Numéro de dépôt: 11290195.4
(22) Date de dépôt: 21.04.2011
(51) Int. Cl.: B01J 8/06

(54) **Reacteur echangeur a tubes baionnettes et a tubes de fumees suspendus a la voute superieure du reacteur**
Wechselreaktor mit Bajonettrohren und Rauchrohren, die am oberen Deckengewölbe des Reaktors aufgehängt sind
Reactor-exchanger with bayonet tubes and fire tubes suspended from the upper vault of the reactor

(30) Priorité: 11.06.2010 FR 1002468
(43) Date de publication de la demande: 14.12.2011
(73) Titulaire: IFP Energies nouvelles, 92852 Rueil-Malmaison Cedex (FR)
(72) Inventeur: Giroudiere, Fabrice, 69530 Orliénas (FR); Nastoll, Willi, 69007 Lyon (FR); Fischer, Beatrice, 69005 Lyon (FR); Pavone, Didier, 69130 Écully (FR); Lavieu, Hervé, 94123 Nogent sur Marne (FR); Gonnet, Daniel, 91440 Bures sur Yvette (FR); Leroux, Jean-Noël, 91480 Quincy-sous-Sénart (FR)

(56) Documents cités:
- WO-A1-2007/118950
- WO-A1-2009/141517
- FR-A1- 2 918 904

## Description

### DOMAINE DE L'INVENTION

La présente invention concerne un réacteur échangeur consistant en une virole cylindrique fermée par un fond supérieur, et un fond inférieur, la virole enfermant une pluralité de tubes de type baïonnette, dits tubes réactionnels, à l'intérieur desquels s'effectue la réaction chimique, ledit réacteur échangeur permettant la mise en oeuvre de réactions fortement endothermiques telles que la réaction de vaporeformage du gaz naturel, le fluide réactif circulant à l'intérieur des tubes, et le fluide caloporteur, en l'occurrence des gaz chauds, étant canalisé à l'intérieur de tubes de fumées entourant les tubes baïonnettes.

Le réacteur échangeur selon l'invention permet d'atteindre des tailles de réacteur ayant un diamètre supérieur à 4 mètres, voire supérieur à 10 mètres, et pouvant même atteindre 18 mètres, avec une différence de pression entre l'intérieur et l'extérieur des tubes réactionnels pouvant atteindre de 30 bars à 100 bars, les gaz chauds pouvant être admis à l'intérieur du réacteur échangeur à des températures de 1300°C.

Le présent réacteur échangeur ne fait pas appel à des plaques tubulaires pour supporter les tubes réactionnels ou les tubes de fumées. De ce fait, il n'utilise pas non plus de système de montage par brides sur la virole, ce qui permet d'atteindre des diamètres supérieurs à 10 mètres et pouvant aller jusqu'à 18 mètres.

Le réacteur selon la présente invention met en oeuvre un dispositif particulier de canalisation des gaz chauds qui circulent à l'intérieur de tubes de fumée, chaque tube de fumée entourant un tube réactionnel.

### EXAMEN DE L'ART ANTERIEUR

L'art antérieur dans le domaine des réacteurs échangeurs destinés à la mise en oeuvre de réactions fortement endothermiques telle que la réaction de vaporeformage d'une coupe hydrocarbonée, est généralement représenté par un type de réacteur échangeur présentant un système de distribution du fluide réactif au moyen d'une première plaque tubulaire et un système de collecte des effluents au moyen d'une seconde plaque tubulaire.

Le système de plaques tubulaires a été analysé et ses limitations ont été levées par une solution décrite dans le brevet FR 2,918,904 qui développe un dispositif de tubes baïonnettes présentant l'entée et la sortie du ou des fluides réactionnels à l'extérieur de la calandre du réacteur.

Dans ce même brevet FR 2,918,904 le gaz chaud, provenant généralement d'une combustion réalisée à l'extérieur du réacteur échangeur et générant des fumée peut être canalisé à l'intérieur de tubes entourant les tubes baïonnettes et appelés "tubes de fumées". Ces tubes de fumées sont supportés par une plaque tubulaire située dans la partie supérieure du réacteur et qui ne subit pas de différences de pression importante de part et d'autre. Néanmoins cette plaque tubulaire de support présente un certain nombre d'inconvénients qui seront développés dans le paragraphe suivant.

La plaque tubulaire de support et les poutres de renfort qui lui sont associées sont soumises à des températures élevées (700°C) qui peuvent atteindre les limites de résistance des matériaux.

En effet cette plaque tubulaire de support des tubes de fumée doit être suffisamment rigide afin de ne pas trop se déformer. Classiquement, on évitera d'avoir une déformation supérieure à la portée divisée par 300. Par exemple, pour un réacteur de 10 mètres de diamètre, la déformation maximum admissible est de 33 mm au centre. Cette rigidité est très importante dans le cas considéré car la plaque sert de support aux tubes de fumée or ces tubes se déplacent verticalement (généralement vers le haut en raison de la perte de charge due à l'écoulement des fumées dans l'espace annulaire), et il est important de limiter ce déplacement qui risquerait d'entraîner le décentrage des tubes baïonnettes ou la déformation des tubes de fumée eux mêmes.

Pour satisfaire ce besoin de rigidité l'homme de l'art utilise des poutres de renfort à disposer entre les différentes rangées de tubes de fumée. Pour un réacteur de 10 mètres de diamètre intérieur, ces poutres sont relativement grosses (par exemple elles ont une hauteur d'environ 500 mm pour la poutre située sur le diamètre du réacteur).

Par ailleurs, la mise en place de ces poutres de renfort nécessite des moyens de fixation sur la virole du réacteur. Un tel montage est également coûteux.

La plaque tubulaire de support, tout comme les poutres, se dilate typiquement d'environ 8 cm pour un réacteur de 10 mètres de diamètre entraînant des problèmes d'alignement entre les tubes baïonnette suspendus à la voûte supérieure.

Un autre problème de l'art antérieur est la durée de vie des tubes de fumée soumis à la radiation des fumées à très haute température (pouvant atteindre 1300°C) qui requiert des matériaux coûteux et/ou fragile sur de grande longueur (15 mètres environ).

La présente invention qu'on peut considérer comme une amélioration du brevet FR 2,918,904 permet de lever les inconvénients de cette plaque de support, tout en augmentant la fraction de longueur des tubes baïonnettes concernée par la canalisation des gaz chauds.

Il en résulte au global une amélioration de l'efficacité du transfert thermique entre le gaz chaud et le fluide réactionnel.

Dans le réacteur dit HTCR d' Haldor Topsoe il existe une plaque tubulaire supportant les tubes de fumée, plaque qui n'existe pas dans le réacteur échangeur selon la présente invention.

### DESCRIPTION SOMMAIRE DES FIGURES

La figure 1 représente un réacteur échangeur selon l'art antérieur, c'est à dire avec une plaque tubulaire de supportage des tubes de fumées qui par ailleurs ne s'étendent pas sur toute la longueur du réacteur échangeur, le gaz chaud étant issu d'une combustion réalisée à l'extérieur du réacteur.
La figure 2 représente un réacteur échangeur selon l'invention, c'est à dire sans plaque tubulaire de support des tubes de fumée, les tubes de fumées s'étendant sur toute la longueur des tubes baïonnette et étant fixés au niveau de la voûte supérieure du réacteur.
La figure 3 représente un réacteur échangeur selon l'invention qui est identique à celui de la figure 2 avec en plus une voûte intérieure qui permet le supportage de la partie inférieure en céramique des tubes de fumée.
La figure 4 représente trois modes de réalisation, notés A, B, C, de la fixation des tubes réactionnels et des tubes de fumée à l'extérieur du réacteur.

### DESCRIPTION SOMMAIRE DE L'INVENTION

Le réacteur échangeur selon la présente invention consiste en une virole de forme cylindrique (1) fermée par une voûte supérieure (2) et un fond inférieur (3), à l'intérieur de laquelle circule le gaz chaud, ladite virole enfermant une multiplicité de tubes réactionnels parallèles, d'axe sensiblement vertical, à l'intérieur desquels circule le fluide réactionnel, les tubes réactionnels (4) étant de type baïonnette, et ayant une densité comprise entre 2 et 12 tubes par m² de section du réacteur, l'entrée et la sortie de chaque tube baïonnette se faisant à l'extérieur du réacteur, au delà de la voûte supérieure (2).

Un tube baïonnette (4) se définit comme l'assemblage d'un tube central interne (5) et d'un tube externe (6) coaxiaux, le tube interne (5) étant ouvert à son extrémité inférieure de manière à permettre la circulation du fluide réactionnel depuis ledit tube interne (5) vers la zone annulaire (7) comprise entre le tube interne (5) et le tube externe (6) ou inversement depuis ladite zone annulaire vers le tube interne.

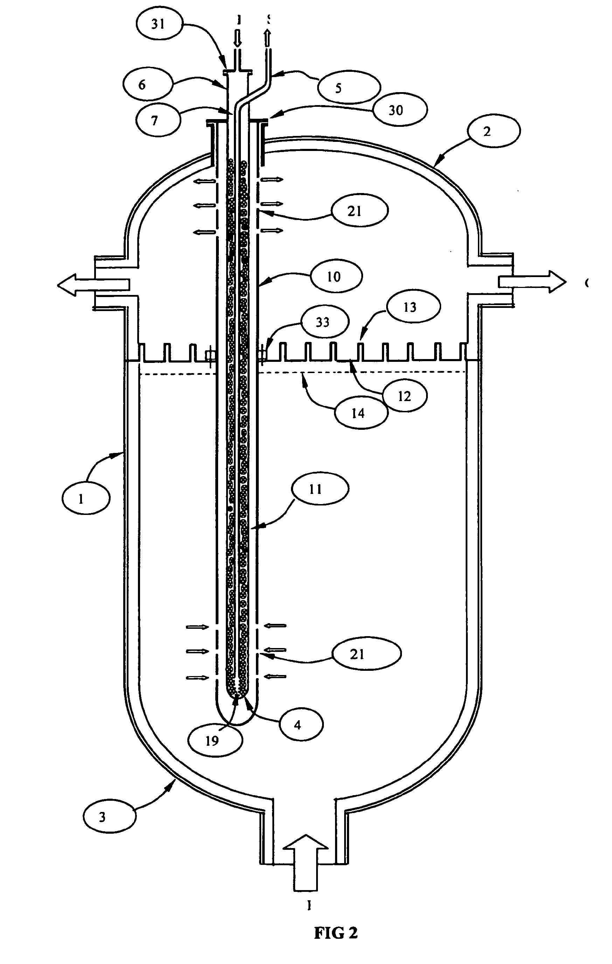

Dans un réacteur échangeur selon la présente invention, l'entrée et la sortie de chaque tube baïonnette se fait à l'extérieur du réacteur tel que cela est montré sur les figures 2, 3 et 4. Tout l'intérieur du réacteur échangeur selon l'invention, c'est à dire la paroi intérieure de la virole (1), de la voûte supérieure (2) et du fond inférieur (3) est revêtu d'un revêtement isolant réfractaire.

Chaque tube baïonnette (4) est entouré d'un tube cylindrique (10) coaxial au tube baïonnette, et appelé tube de fumée, qui s'étend sur toute la longueur du tube baïonnette, le gaz chaud circulant à l'intérieur de l'espace annulaire (11) compris entre la paroi externe du tube baïonnette (4) et le tube de fumée (10) avec une vitesse comprise entre 40 m/s et 75 m/s. Dans le cadre de la présente invention le gaz chaud est généré par une combustion réalisée à l'extérieur du réacteur échangeur et générant un fluide chaud apportant les calories nécessaires à la réaction chimique, appelé dans la suite du texte gaz chaud ( quelquefois appelé également fumée).

L'évacuation du gaz chaud se fait en partie supérieure des tubes de fumées (10) au moyen d'un certain nombre d'orifices d'évacuation (21) percés à la paroi desdits tubes de fumée.

Selon une variante de l'invention, l'admission des gaz chauds se fait dans la partie inférieure des tubes de fumées (10), réalisée préférentiellement en céramique, au moyen d'un certain nombre d'orifices (23). Ces orifices (23) peuvent être étagés de manière à créer une admission progressive des gaz chauds à l'intérieur des tubes de fumées (10).

Les tubes baïonnettes (4) sont préférentiellement assemblés selon un pas triangulaire. L'espacement entre chaque tube baïonnette, ou distance centre à centre, est généralement compris entre 2 et 5 fois le diamètre intérieur du tube externe (6).

Un espacement selon un pas carré reste néanmoins parfaitement dans le cadre de la présente invention.

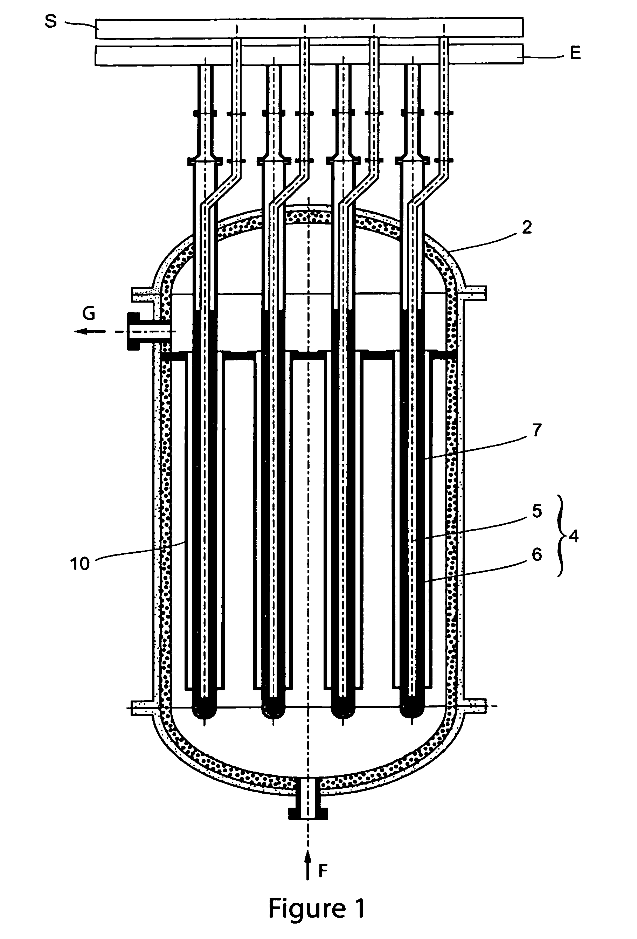

Selon un mode de réalisation de la présente invention, le tube central interne (5) de chaque tube baïonnette (4) traverse le tube externe (6) en un point situé à l'extérieur du réacteur, à une distance d'au moins 1 mètre par rapport à la voûte supérieure (2) du réacteur échangeur, et sous un angle compris entre 30° et 60° par rapport à la verticale. Cette disposition permet de séparer nettement l'entrée et la sortie de chaque tube baïonnette (4), de manière à faciliter la mise en place du dispositif de distribution des fluides réactionnels, et du dispositif de collecte des effluents réactionnels tels que représentés sur la figure 1

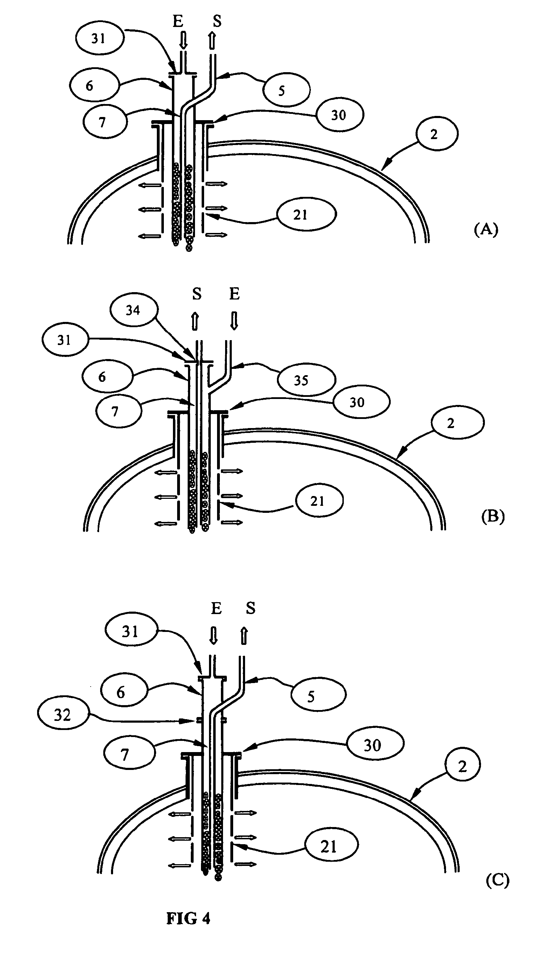

Plusieurs arrangements de sortie de la voute supérieure (2) des tubes baïonnettes sont possibles en restant dans le cadre de la présente inventions. Trois possibilités sont présentées sur la figure 4.
- Le type A correspond à ce qui vient d'être décrit : le tube central interne (5) du tube baïonnette (4) traverse le tube externe (6). L'entrée de la charge (E) se fait par la bride de fermeture (31) du tube externe (6), et la sortie (S) par la sortie latérale du tube central (5). La bride de fermeture (30) du tube de fumée est fixée sur le tube baïonnette (6).
- Selon un autre mode de réalisation de la présente invention représenté sur le type B de la figure 4, le tube externe (6) est fermé par une bride (31) traversée par le tube interne (5). L'entrée (E) de la charge se fait alors latéralement par le tube (35) connecté au tube externe (6), et la sortie (S) des effluents par le tube (34) connecté au tube (5) au milieu de la bride (31). L'étanchéité entre le tube interne (5) et le tube (36) permettant la sortie de l'effluent réactionnel est assuré par un joint torique (34).
- Enfin selon un troisième mode de réalisation de la présente invention, figuré dans le type C de la figure 4, une bride supplémentaire (32) permet le cas échéant de sortir totalement le tube central (5) de la baïonnette (6) sans démonter préalablement celle-ci.

De manière préférée, le fluide réactif est introduit par l'extrémité d'entrée de la zone annulaire (7) comprise entre le tube externe (6) et le tube central interne (5), ladite zone annulaire (7) étant au moins en partie remplie de catalyseur.

Les effluents réactionnels sont récupérés par l'extrémité de sortie du tube central interne (5). La tubulure d'entrée (A) peut être commune à plusieurs tube baïonnette (4), et la tubulure de sortie (S) du fluide réactionnel peut être commune à plusieurs tubes baïonnettes (4).

De manière générale, le gaz chaud est constitué de fumées de combustion, ladite combustion ayant lieu dans un équipement distinct du présent réacteur échangeur.

Les gaz chauds sont généralement introduits à l'intérieur de la virole (1) du réacteur échangeur par la tubulure d'entrée (F) située dans la partie inférieure dudit réacteur. Les gaz chauds sont canalisés par les tubes de fumée (10) entourant chaque tube baïonnette (4) et quittent lesdits tubes de fumées par les orifices d'évacuation (21) aménagés à la partie supérieure de chaque tube de fumée.

Les gaz chauds quittent le réacteur par un ensemble de tuyauterie (G) (ou collecteur) située en partie supérieure du réacteur.

Les tubes de fumées (10) et les tubes baïonnettes (4) sont fixés au niveau de la voûte supérieure (2) du réacteur.

La concentricité du tube interne (5) et du tube externe (6) formant le tube baïonnette (4) est assurée par un dispositif multiple de centrages souples fixés au tube intérieur (5) et permettant de laisser passer le catalyseur lors de son chargement.

D'autres caractéristiques du réacteur échangeur selon la présente invention sont données dans la description détaillée.

L'invention consiste également en un procédé de vaporeformage d'une coupe hydrocarbure utilisant le réacteur échangeur selon la présente invention.

De manière générale, le procédé de vaporeformage d'une coupe hydrocarbure utilisant le réacteur échangeur selon l'invention est opéré à une pression entre les tubes réactionnels et les tubes de fumée comprise entre 1 et 10 bars absolus, et à une pression à l'intérieur des tubes baïonnettes comprise entre 25 et 100 bars absolus.

La température à l'intérieur des tubes réactionnels est généralement comprise entre 700°C et 950°C.

La température des gaz chauds admis à l'intérieur du réacteur échangeur peut atteindre 1300°C.

La présente invention concerne également une méthode de montage du réacteur échangeur qui est précisée dans la description détaillée.

### DESCRIPTION DETAILLEE DE L'INVENTION

Le réacteur échangeur selon la présente invention est destiné à la mise en oeuvre de réactions fortement endothermiques et à des niveaux de températures pouvant aller jusqu'à 950°C. Typiquement, il pourra être utilisé pour le vaporeformage de coupes hydrocarbures, notamment le naphta ou le gaz naturel en vue de la production d'hydrogène.

La description qui suit est faite au moyen des figures 2 ,3 et 4.

Le réacteur échangeur selon l'invention est constitué d'une virole de forme globalement cylindrique (1) fermée dans sa partie supérieure par une voûte supérieure (2) de forme sensiblement torique-sphéroïdale au sens où la section de ladite voûte supérieure peut combiner une partie torique et une partie sphérique, et dans sa partie inférieure par un fond bombé (3) de forme sensiblement ellipsoïdale. La virole cylindrique (1) enferme une pluralité de tubes baïonnettes verticaux (4), de longueur (L), s'étendant sur l'intégralité de la virole (1) et de la voûte supérieure (2).

On réserve un espace libre entre l'extrémité inférieure des tubes de fumée (10) et la paroi du fond inférieur de manière à faciliter les opérations de manutention des dits tubes.

Les tubes (4) sont de type baïonnette, c'est à dire qu'ils sont constitués d'un tube central interne (5) contenu dans un tube externe (6), le tube central interne (() et le tube externe (6) étant sensiblement coaxiaux. La concentricité du tube interne (5) et du tube externe (6) formant le tube baïonnette (4) est assurée par un dispositif de centrage souple fixé au tube intérieur (5) et permettant de laisser passer le catalyseur lors de son chargement.

L'espace annulaire (7) compris entre le tube central interne (5) et le tube externe (6) est généralement rempli de catalyseur, ce catalyseur ayant généralement la forme de particules cylindriques ou sphériques, qui dans le cas de la réaction de vaporeformage, ont une longueur typique de quelques mm et un diamètre de quelques mm. La forme des particules de catalyseur n'est pas un élément caractéristique de l'invention qui est compatible avec toute forme des particules de catalyseur dont la taille permet leur introduction dans la partie annulaire (7) des tubes verticaux (4).

Le fluide réactionnel est préférentiellement introduit dans le tube baïonnette (4) par la zone annulaire catalytique (7) dont l'extrémité d'entrée se trouve à l'extérieur du réacteur, les réactions de vaporeformage se développant dans la zone annulaire catalytique, et les effluents étant récupérés en sortie du tube central (5), ladite sortie étant également située à l'extérieur du réacteur.

Une autre configuration dans laquelle le fluide réactionnel est introduit par le tube central (5) et les effluents récupérés en sortie de la zone annulaire (7) est également possible.

Les fluides réactifs circulent donc préférentiellement à l'intérieur des tubes baïonnette (4), d'abord en descendant le long de la zone annulaire (7) du tube, puis en remontant le long du tube central (5), les dits tubes (4) ayant leur extrémité d'entrée/sortie situées à l'extérieur du réacteur échangeur, et lesdits tubes (4) étant chauffés par des gaz chauds circulant à l'intérieur des tubes de fumée (10) entourant chaque tube baïonnette (4).

Les gaz chauds peuvent être constitués de fumées issues d'une combustion ayant lieu à l'extérieur du réacteur échangeur. Typiquement le combustible peut être une coupe hydrocarbure à nombre d'atomes de carbone compris entre 1 et 20, ou de l'hydrogène, ou un mélange de ces combustibles.

Le combustible peut comporter une proportion variable de CO et de CO2, pouvant aller jusqu'à 30 % molaire.

Le rapport H/D entre la hauteur H du réacteur et son diamètre D est généralement compris entre 1 et 10, préférentiellement compris entre 1 et 8, et de manière encore préférée compris entre 1 et 4.

Les tubes baïonnettes (4) sont entourés de tube de fumée (10) sensiblement coaxiaux auxdits tube baïonnettes, qui permettent de canaliser les gaz chauds autour des tubes baïonnette (4) avec une vitesse de circulation à l'intérieur du tube de fumée (10) comprise entre 40 m/s et 75 m/s, et préférentiellement comprise entre 50 m/s et 70 m/s.

Le nombre de tubes baïonnette et donc le nombre de tubes de fumée par m² de section du réacteur est généralement compris entre 2 et 12, et préférentiellement compris entre 3 et 8. On entend par section du réacteur la section géométrique du réacteur supposée vide de tout interne.

Les tubes baïonnettes (4) forment le plus souvent un pas triangulaire avec une distance centre à centre comprise entre 2 et 5 fois, et préférentiellement comprise entre 2 et 3 fois le diamètre intérieur du tube externe (6).

L'invention consiste à suspendre les tubes baïonnettes (4) et les tubes de fumées (10) à la voûte supérieure (2) du réacteur. Ainsi les problèmes de dilatation qui pouvaient entraîner un défaut de concentricité entre les tubes baïonnettes et les tubes de fumée dans l'art antérieur sont résolus.

En effet, lorsque la voûte supérieure (2) se met en température, l'entraxe entre les différents tubes baïonnettes (4) peut sensiblement changer sans pour autant entraîner des problèmes de concentricité, car les tubes de fumées (10) sont suspendus au même niveau que les tubes baïonnettes (4), c'est à dire au niveau de la voûte supérieure (2), et selon une variante, utilisent le même dispositif de fixation par brides que les tubes baïonnette (4).

Cette fixation par brides est montrée plus en détail sur les figures 4a , 4b et 4c qui correspondent à plusieurs modes de réalisation de la sortie des tubes baïonnettes (4) et des tubes de fumée (10) à l'extérieur du réacteur.

Dans la mesure où un montage par bride est bien connu de l'homme du métier celui-ci ne sera pas décrit plus en détail.

Pour permettre l'évacuation des gaz chauds depuis les tubes de fumée (10) vers la virole (1), des orifices d'évacuation (21) sont aménagés dans la partie supérieure des tubes de fumées (10). Ces orifices d'évacuation peuvent avoir des formes très diverses, rectangulaire ou curviligne, en particulier circulaire, et peuvent être échelonnés à différentes hauteurs le long du tube de fumée (10) afin de ne pas fragiliser lesdits tubes de fumées (10).

Le dispositif est complété par un plateau dit d'étanchéité (12) qui utilise les tubes de fumée (10) pour être fixé. Ce plateau d'étanchéité (12) peut être constitué de plusieurs éléments afin de pouvoir encaisser des déformations dues aux dilatations thermiques sans conséquences sur les tubes de fumée (10).

Ce plateau d'étanchéité est supporté par les tubes de fumée (10) eux-mêmes, ce qui permet de réduire les coûts par rapport à une plaque d'étanchéité autoportante ou supportée par des poutres.

Les jeux de dilatation seront par exemple réalisés sous forme de plis (13) qui sont avantageusement orientés vers le haut afin d'éviter que des débris puissent se mettre dans ces plis et empêcher la dilatation thermique.

Afin d'allonger la durée de vie des tubes de fumée (10) et de réduire les coûts des matériaux requis pour leur réalisation, la présente invention prévoit dans une variante d'utiliser préférentiellement deux matériaux différents pour leur réalisation, en fonction de la température locale des fumées.

Selon cette variante, la partie supérieure des tubes de fumées (10) est métallique et la partie inférieure desdits tubes de fumée (10) est en céramique. On entend par partie supérieure la partie du tube qui s'étend depuis la voûte supérieure (2) jusqu'à la jonction avec la partie inférieure en céramique.

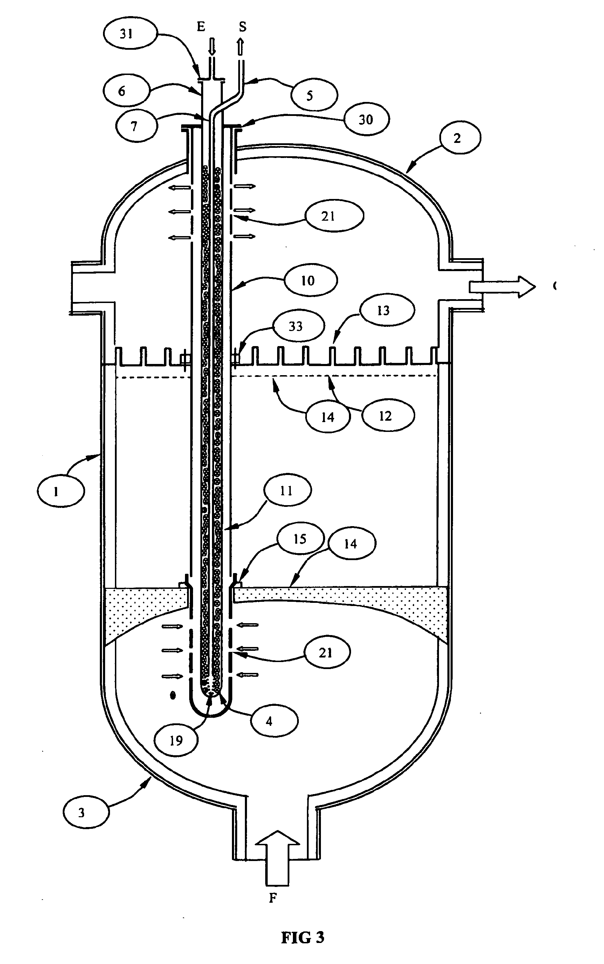

Selon l'invention, la partie métallique supérieure est suspendue au niveau de la voûte supérieure (2), tandis que la partie céramique inférieure est accrochée à une voûte en brique (14) située en partie basse du réacteur. Cette voûte inférieure (14) est montrée sur la figure 3. De façon préférée, le diamètre intérieur de la partie céramique des tubes de fumée (10) est légèrement supérieur au diamètre externe de la partie métallique des dits tubes (10), de manière à permettre à la partie métallique de coulisser à l'intérieur de la partie céramique assurant ainsi une jonction "souple" entre les deux parties qui permet également de résoudre les problèmes de dilatation différentielle entre partie métallique et partie céramique.

La voûte inférieure (14) est préférentiellement constituée d'éléments en brique réfractaire laissant les passages nécessaire pour la partie inférieure céramique des tubes de fumée (10), qui vont pendre sous la voûte, préférentiellement de 2 m à 5 m et encore plus préférentiellement de 2 m à 4 m au dessous de la dite voûte.

De cette façon le rayonnement des fumées très chaudes du fond du réacteur est bloqué par la voûte en réfractaire (14) et par les tubes de fumée (10) en céramique qui entourent totalement les tubes baïonnettes.

La partie métallique des tubes de fumées (10), située au dessus de la voûte (14) voit de cette façon des températures beaucoup plus basses, ce qui permet d'utiliser une métallurgie moins coûteuse pour ladite partie métallique.

Dans un mode d'assemblage préféré montré sur la figure 3, la partie supérieure de la voûte inférieure (14) est plate, et posées sur cette voûte, des collerettes carrées (15) en céramique de forme autobloquante permettent de bloquer les tubes en céramique en place après les avoir glissés par le bas et les avoir fait tourner d'une fraction de tour. Ces tubes de fumée (10) en céramique pourront avantageusement être constitués de plusieurs morceaux afin de faciliter leur mise en place.

Il est possible sans sortir du cadre de la présente invention, de réaliser la voûte inférieure (14) en béton réfractaire.

La voûte (14) n'a pas à être rigoureusement étanche vis à vis des fumées, puisque la circulation des fumées est bloquée par le plateau d'étanchéité (12) placé dans la partie supérieure du réacteur échangeur. Ainsi l'intégralité des fumées est admise dans les tubes de fumées (10) par les orifices d'admission (23).

Les tubes de fumées en céramique sont pourvus d'orifices d'admission (23) de formes diverses, par exemple rectangulaire ou circulaire, disposés à plusieurs niveaux le long du tube de fumée (10). Ces orifices d'admission des fumées (23) sont situés au dessous du niveau de la voûte (14).

Les tubes de fumées (10) sont également pourvus d'orifices d'évacuation (21) des fumées situés dans la partie supérieure, donc métallique, des dits tubes (10).

Ces orifices d'évacuation (21) sont situés au dessus du niveau du plateau d'étanchéité (12).

Lorsque la température des gaz chauds devient inférieure à 800°C, les tubes de fumée peuvent être munis d'ailettes ou de picots généralement fixés à la paroi du tube réactionnel externe (6). L'effet de ces ailettes est d'augmenter le coefficient de transfert de chaleur depuis les gaz chauds circulant à l'intérieur des tubes de fumée (10) vers le fluide réactionnel circulant à l'intérieur des tubes baïonnettes (4).

Globalement cet augmentation du coefficient de transfert de chaleur peut se traduire par une réduction de la longueur des tubes baïonnettes (4) et des tubes de fumées (10), et donc par une meilleure compacité du réacteur, au sens de la diminution de son rapport H/D ( hauteur sur diamètre).

Le montage du réacteur échangeur selon l'invention est préférentiellement réalisé en suivant les principales étapes suivantes :
1) transport du réacteur complet, c'est à dire virole +fond inférieur + voute supérieure + encrage de l'isolant,
2) transport des tubes baïonnettes (4) déjà assemblés,
3) réalisation de la voûte en brique inférieure ( 14),
4) pose de l'isolant thermique sur l'ensemble de la paroi interne de la virole (1), de la voute supérieure (2) et du fond inférieur (3),
5) réalisation du plateau d'étanchéité (12), en laissant libre les passages pour les tubes de fumée (10),
6) mise en place de la partie inférieure en céramique des tubes de fumée (10)
7) montage de la partie supérieure métallique des tubes de fumée (10) par le haut avec engagement de l'extrémité inférieure à l'intérieur de la partie céramique, déjà en place, et accrochage du plateau d'étanchéité
8) introduction des tubes baïonnettes (4) à l'intérieur des tubes de fumée (10) et fixation de ces tubes (4) et (10) au niveau de la voûte supérieure (2),
9) installation des collecteurs de liaison (A) et (S),
10) chargement du catalyseur à l'intérieur des tubes baïonnettes (4).

### EXEMPLE COMPARATIF

L'exemple comparatif ci-dessous montre l'intérêt de prolonger les tubes de fumée (10) vers la voûte supérieure, car l'échange thermique est amélioré, et on peut de ce fait opérer avec des fumées légèrement moins chaudes, c'est à dire de 15° à 20° inférieures par rapport à l'art antérieur.

Dans le premier cas, on procède avec un réacteur selon l'art antérieur tel que représenté figure 1, et dans un deuxième cas, on modifie le réacteur selon la présente invention tel que représenté sur la figure 2.

Dans le cas selon l'invention, les tubes de fumées (10) sont prolongés vers le haut du réacteur jusqu'à la voûte supérieure (3).

Le réacteur échangeur est destiné à produire 94000 Nm3/heure d'H2 par vaporeformage de gaz naturel.
- Côté virole, les fumées provenant d'une combustion réalisée à l'extérieur du réacteur échangeur ont la composition suivante en % molaire:

| | |
|---|---|
| H2O | 12,72% |
| 02 | 6,91 % |
| CO2 | 13,42% |
| N2 | 66,16 % |
| Ar | 0,79%. |

La température d'entrée des fumées est de 1286°C dans les deux cas ( art antérieur et selon l'invention) pour obtenir 900°C à l'extrémité inférieure des tubes baïonnettes (sortie catalyseur).

Pression des fumées à l'entrée 4,3 10⁵ Pa

Le débit total de fumée est de 13470 kmole/h ( k est l'abréviation de kilo, soit 10³)
- Côté tube, la composition en % molaire de la charge à traiter est la suivante :
   H2O : 69,23%
   CH4 : 28,53 %
   C2H6 : 2,24 %

La pression à l'entrée des tubes baïonnettes est de 30 bars, et la température 432°C.

Les dimensions principales du réacteur échangeur selon l'invention sont les suivantes: Diamètre du réacteur: 10,4 m

Hauteur totale des tubes baïonnettes: 18,1 m

Longueur sur laquelle s'effectue l'échange de chaleur entre les tubes baïonnettes (4) et les fumées accélérées dans les tubes de fumées (10) :
cas 1 (art antérieur) : 15,5 m
cas 2 (selon l'invention) : 17 m

Nombre de tubes baïonnette (et de tubes de fumées): 328

Vitesse de circulation des fumées à l'intérieur des tubes de fumée: 75 à 45 m/s

Les tubes baïonnette et les tubes de fumée sont suspendus à la voûte supérieure du réacteur par un système de brides tel que celui représenté à la figure 3.

Le tableau ci dessous permet de comparer les performances thermiques du cas 1 (art antérieur) et du cas 2 (selon l'invention).

La température de sortie des fumées est abaissée à 661°C dans le cas selon l'invention contre 680°C selon l'art antérieur, ce qui traduit une meilleure efficacité de l'échange thermique. Cet effet résulte directement de l'allongement des tubes de fumées.

L'invention permet également d'utiliser des fumées un peu moins chaudes, donc de desserrer la contrainte sur la métallurgie des tubes baïonnettes en diminuant la température de peau de ces derniers. Cet impact est économiquement important sur des réacteurs pouvant comporter jusqu'à 400 tubes baïonnettes.

**Tableau 1**

| | Cas 1 (art antérieur) | Cas 2 (suivant l'invention) |
|---|---|---|
| Température entrée fumées | 1286 °C | 1286 °C |
| Température sortie fumée | 680 °C | 661 °C |
| Température entrée charge | 432 °C | 432 °C |
| Température sortie catalyseur | 900 °C | 900 °C |
| Température sortie produit | 571 °C | 579 °C |
| Température max. métal | 1051 °C | 1043 °C |

## Revendications

1. Réacteur échangeur consistant en une virole (1) de forme cylindrique fermée par une voûte supérieure (2) et un fond inférieur (3), l'ensemble virole, fond inférieur et voute supérieure étant revêtu d'un revêtement isolant réfractaire, ladite virole (1) enfermant une multiplicité de tubes baïonnette (4) parallèles d'axe sensiblement vertical s'étendant depuis la partie inférieure de la virole (1) jusqu'à la voûte supérieure (2), à l'intérieur desquels circule le fluide réactionnel, chaque tube baïonnette (4) étant entouré sur toute sa longueur d'un tube de fumée (10), l'entrée et la sortie de chaque tube baïonnette se faisant à l'extérieur du réacteur, au delà de la voûte supérieure (2), et les gaz chauds étant générés à l'extérieur du réacteur et introduits à l'intérieur de la virole (1) par une ouverture (F) située dans le fond inférieur (3), puis entrant dans les tubes de fumées (10) par des orifices d'admission (23) percés à la paroi desdits tubes de fumées, et quittant lesdits tubes de fumées (10) par des orifices d'évacuation (21) aménagés à la partie supérieure de chaque tube de fumée, les dits gaz chauds étant évacués du réacteur échangeur par une ouverture latérale (G), chaque tube baïonnettes (4) et le tube de fumée (10) qui l'entoure étant suspendus à la voûte supérieure (2) dudit réacteur échangeur.

2. Réacteur échangeur selon la revendication 1, dans lequel chaque tube baïonnette (4) et le tube de fumée (10) qui l'entoure sont fixés au niveau de la voûte supérieure (2) par un système de brides (30, 31, 32).

3. Réacteur échangeur selon l'une quelconque des revendication 1 à 2, dans lequel l'espacement entre chaque tube baïonnette (4), ou distance centre à centre, est compris entre 2 et 5 fois le diamètre intérieur du tube externe (6).

4. Réacteur échangeur selon l'une quelconque des revendication 1 à 3, dans lequel chaque tube de fumée (10) est divisé en une partie supérieure métallique et une partie inférieure en céramique.

5. Réacteur échangeur selon l'une quelconque des revendication 1 à 4, dans lequel une voûte (14) en briques réfractaires couvrant toute la section du réacteur échangeur est située au niveau de la jonction entre la partie en céramique et la partie métallique des tubes de fumées (10) en permettant le passage desdits tubes de fumées.

6. Réacteur échangeur selon l'une quelconque des revendication 1 à 5, dans lequel un plateau d'étanchéité (12) situé dans la partie supérieure du réacteur échangeur est fixé aux tubes de fumée (10).

7. Réacteur échangeur selon l'une quelconque des revendication 1 à 6, dans lequel les tubes de fumées (10) sont munis dans leur partie inférieure d'orifices d'admission (23) situés au dessous du niveau de la voûte (14), et dans leur partie supérieure d'orifices d'évacuation (21) situés au dessus du niveau du plateau d'étanchéité (12).

8. Réacteur échangeur selon l'une quelconque des revendication 1 à 7, dans lequel la densité des tubes baïonnettes est comprise entre 2 et 12 tubes par m2 de section du réacteur.

9. Réacteur échangeur selon l'une quelconque des revendication 1 à 8, dans lequel le plateau d'étanchéité (12) possède un certain nombre de plis (13) permettant d'assurer sa propre dilatation thermique.

10. Procédé de vaporeformage d'une coupe hydrocarbure utilisant le réacteur échangeur selon l'une quelconque des revendications 1 à 9, dans lequel le fluide caloporteur est constitué par des fumées de combustion, la combustion étant réalisée à l'extérieur du réacteur échangeur à partir d'un combustible constitué d'une coupe hydrocarbure à nombre d'atomes de carbone compris entre 1 et 20.

11. Procédé de vaporeformage d'une coupe hydrocarbure utilisant le réacteur échangeur selon l'une quelconque des revendications 1 à 9, dans lequel la pression à l'intérieur de la virole est comprise entre 1 et 10 bars absolus, et la pression à l'intérieur des tubes baïonnettes est comprise entre 25 et 100 bars absolus.

12. Procédé de vaporeformage d'une coupe hydrocarbure utilisant le réacteur échangeur selon l'une quelconque des revendications 1 à 9, dans lequel la vitesse de circulation des gaz chauds à l'intérieur des tubes de fumée (10) est comprise entre 40 m/s et 75 m/s, et préférentiellement comprise entre 50 et 70 m/s.

13. Méthode d'assemblage du réacteur échangeur selon la revendication 1 comportant les principales étapes suivantes:
1) transport du réacteur complet, c'est à dire virole + fond inférieur + voute supérieure + encrage de l'isolant,
2) transport des tubes baïonnettes (4) déjà assemblés,
3) réalisation de la voûte en brique inférieure (14),
4) pose de l'isolant thermique sur l'ensemble de la paroi interne de la virole (1), de la voute supérieure (2) et du fond inférieur (3),
5) réalisation du plateau d'étanchéité (12), en laissant libre les passages pour les tubes de fumée (10),
6) mise en place de la partie inférieure en céramique des tubes de fumée (10),
7) montage de la partie supérieure métallique des tubes de fumée (10) par le haut avec engagement de l'extrémité inférieure à l'intérieur de la partie céramique, déjà en place, et accrochage du plateau d'étanchéité (12),
8) introduction des tubes baïonnettes (4) à l'intérieur des tubes de fumée (10) et fixation de ces tubes (4) et (10) au niveau de la voûte supérieure (2),
9) installation des collecteurs de liaison (A) et (S),
10) chargement du catalyseur à l'intérieur des tubes baïonnettes (4).

## Claims

1. A exchanger-reactor consisting of a shell (1) with a cylindrical shape closed by an upper dome (2) and a lower bottom (3), the assembly of the shell, lower bottom and upper dome being coated with a refractory insulating coating, said shell (1) enclosing a plurality of parallel bayonet tubes (4) with a substantially vertical axis extending from the lower portion of the shell (1) to the upper dome (2), inside which the reaction fluid moves, each bayonet tube (4) being surrounded over its entire length with a chimney (10), the inlet and the outlet of each bayonet tube being outside the reactor, beyond the upper dome (2), and the hot gases being generated outside the reactor and introduced into the shell (1) via an opening (F) located in the lower bottom (3), then entering the chimneys (10) via admission orifices (23) pierced in the wall of said chimneys, and leaving said chimneys (10) via evacuation orifices (21) provided in the upper portion of each chimney, said hot gases being evacuated from the exchanger-reactor via a lateral opening (G), each bayonet tube (4) and the chimney (10) which surrounds it being suspended from the upper dome (2) of said exchanger-reactor.

2. A exchanger-reactor according to claim 1, in which each bayonet tube (4) and the chimney (10) which surrounds it are fixed to the upper dome (2) via a system of flanges (30, 31, 32).

3. A exchanger-reactor according to claim 1 or claim 2, in which the spacing between each bayonet tube (4), or centre-to-centre distance, is in the range 2 to 5 times the internal diameter of the outer tube (6).

4. An exchanger-reactor according to any one of claims 1 to 3, in which each chimney (10) is divided into an upper metallic portion and a lower portion formed from ceramic.

5. A exchanger-reactor according to any one of claims 1 to 4, in which a dome (14) formed from refractory bricks covering the entire section of the exchanger-reactor is located at the junction between the ceramic portion and the metallic portion of the chimneys (10), allowing the passage of said chimneys.

6. An exchanger-reactor according to any one of claims 1 to 5, in which a sealing plate (12) located in the upper portion of the exchanger-reactor is fixed to the chimneys (10).

7. An exchanger-reactor according to any one of claims 1 to 6, in which the chimneys (10) are provided in their lower portion with admission orifices (23) located below the level of the dome (14), and in their upper portion with evacuation orifices (21) located above the level of the sealing plate (12).

8. An exchanger-reactor according to any one of claims 1 to 7, in which the density of the bayonet tubes is in the range 2 to 12 tubes per m² of reactor section.

9. An exchanger-reactor according to any one of claims 1 to 8, in which the sealing plate (12) has a certain number of folds (13) to allow for its thermal expansion.

10. A process for steam reforming a hydrocarbon cut using the exchanger-reactor according to any one of claims 1 to 9, in which the heat transport fluid is constituted by combustion flue gases, the combustion being carried out outside the exchanger-reactor using a fuel constituted by a hydrocarbon cut containing in the range 1 to 20 carbon atoms.

11. A process for steam reforming a hydrocarbon cut using the exchanger-reactor according to any one of claims 1 to 9, in which the pressure inside the dome is in the range 1 to 10 bars absolute, and the pressure inside the bayonet tubes is in the range 25 to 100 bars absolute.

12. A process for steam reforming a hydrocarbon cut using the exchanger-reactor according to any one of claims 1 to 9, in which the rate of circulation of the hot gases inside the chimneys (10) is in the range 40 m/s to 75 m/s, preferably in the range 50 to 70 m/s.

13. A method for assembling an exchanger-reactor according to claim 1, comprising the following principal steps:
1) transporting the complete reactor, i.e. shell + lower bottom + upper dome + keying for insulator;
2) transporting ready-assembled bayonet tubes (4);
3) producing the lower dome (14) from brick;
4) placing thermal insulation on the assembly of the inner wall of the shell (1), the upper dome (2) and the lower bottom (3);
5) producing a sealing plate (12), leaving open passages for the chimneys (10);
6) positioning the lower ceramic portions of the chimneys (10);
7) assembling the upper metallic portion of the chimneys (10) from the top, engaging the lower end inside the ceramic portion which is already in place, and attaching the sealing plate (12);
8) introducing the bayonet tubes (4) into the chimneys (10) and fixing said tubes (4) and (10) to the upper dome (2);
9) installing linking collectors (A) and (S);
10) charging catalyst into the bayonet tubes (4).

## Patentansprüche

1. Wechselreaktor, bestehend aus einem Mantel (1) von zylindrischer Form, der durch einen oberen Deckengewölbe (2) und einen unteren Boden (3) geschlossen ist, wobei die Einheit Mantel, unterer Boden und oberer Deckengewölbe mit einer feuerfesten Isolierverkleidung überzogen ist, wobei der Mantel (1) eine Vielzahl von parallelen Bajonettrohren (4) mit einer im Wesentlichen vertikalen Achse umfasst, die sich vom unteren Teil des Mantels (1) bis zum oberen Deckengewölbe (2) erstrecken und in denen das Reaktionsfluid zirkuliert, wobei jedes Bajonettrohr (4) auf seiner gesamten Länge von einem Rauchrohr (10) umgeben ist, wobei der Eingang und der Ausgang jedes Bajonettrohrs außerhalb des Reaktors über dem oberen Deckengewölbe (2) angeordnet ist, und wobei die heißen Gase außerhalb des Reaktors erzeugt und in das Innere des Mantels (1) durch eine Öffnung (F) eingeleitet werden, die sich im unteren Boden (3) befindet, dann in die Rauchrohre (10) durch Einlassöffnungen (23) eintreten, die an der Wand der Rauchrohre vorgesehen sind, und die Rauchrohre (10) durch Ablassöffnungen (21) austreten, die am oberen Teil jedes Rauchrohrs vorgesehen sind, wobei die heißen Gase aus dem Austauschreaktor durch eine seitliche Öffnung (G) abgelassen werden, wobei jedes Bajonettrohr (4) und das dieses umgebende Rauchrohr (10) am oberen Deckengewölbe (2) des Austauschreaktors angehängt sind.

2. Wechselreaktor nach Anspruch 1, bei dem jedes Bajonettrohr (4) und das dieses umgebende Rauchrohr (10), im Bereich des oberen Deckengewölbes (2) durch ein Flanschsystem (30, 31, 32) befestigt ist.

3. Wechselreaktor nach einem der Ansprüche 1 bis 2, bei dem der Abstand zwischen jedem Bajonettrohr (4) oder Mittenabstand zwischen 2- und 5-mal den Innendurchmesser des äußeren Rohrs (6) beträgt.

4. Wechselreaktor nach einem der Ansprüche 1 bis 3, bei dem jedes Rauchrohr (10) in einen metallischen oberen Teil und einen unteren Teil aus Keramik geteilt ist.

5. Wechselreaktor nach einem der Ansprüche 1 bis 4, bei dem ein Gewölbe (14) aus feuerfesten Ziegeln, das den gesamten Querschnitt des Austauschreaktors bedeckt, im Bereich der Verbindung zwischen dem Keramikteil und dem Metallteil der Rauchrohre (10) angeordnet ist, wobei es die Durchführung der Rauchrohre ermöglicht.

6. Wechselreaktor nach einem der Ansprüche 1 bis 5, bei dem eine Abdichtungsplatte (12), die im oberen Teil des Austauschreaktors angeordnet ist, an den Rauchrohren (10) befestigt ist.

7. Wechselreaktor nach einem der Ansprüche 1 bis 6, bei dem die Rauchrohre (10) in ihrem unteren Teil mit Einlassöffnungen (23), die sich unter dem Niveau des Gewölbes (14) befinden, und in ihrem oberen Teil mit Ablassöffnungen (21) versehen sind, die sich über dem Niveau der Abdichtungsplatte (12) befinden.

8. Wechselreaktor nach einem der Ansprüche 1 bis 7, bei dem die Dichte der Bajonettrohre zwischen 2 und 12 Rohre pro m² Querschnitt des Reaktors beträgt.

9. Wechselreaktor nach einem der Ansprüche 1 bis 8, bei dem die Abdichtungsplatte (12) eine gewisse Anzahl von Falzen (13) umfasst, die es ermöglichen, ihre eigene Wärmedehnung zu gewährleisten.

10. Verfahren zum Dampfreformieren eines Kohlenwasserstoffschnitts, das den Austauschreaktor nach einem der Ansprüche 1 bis 9 einsetzt, bei dem das Wärmefluid von Verbrennungsgasen gebildet ist, wobei die Verbrennung außerhalb des Wechselreaktors aus einem Brennstoff stattfindet, der aus einem Kohlenwasserstoffschnitt mit einer Anzahl von Kohlenstoffatomen zwischen 1 und 20 gebildet ist.

11. Verfahren zum Dampfreformieren eines Kohlenwasserstoffschnitts, das den Austauschreaktor nach einem der Ansprüche 1 bis 9 einsetzt, bei der Druck innerhalb des Mantels zwischen 1 und 10 bar absolut und der Druck innerhalb der Bajonettrohre zwischen 25 und 100 bar absolut beträgt.

12. Verfahren zum Dampfreformieren eines Kohlenwasserstoffschnitts, das den Austauschreaktor nach einem der Ansprüche 1 bis 9 einsetzt, bei dem die Umlaufgeschwindigkeit der heißen Gase im Inneren der Rauchrohre (10) zwischen 40 m/s und 75 m/s und vorzugsweise zwischen 50 m/s und 70 m/s beträgt.

13. Methode zum Zusammenbau des Austauschreaktors nach Anspruch 1, umfassend die folgenden Hauptschritte:
1) Transport des vollständigen Reaktors, d.h. Mantel + unterer Boden + oberes Gewölbe + Verankerung des Isolators,
2) Transport der bereits zusammengebauten Bajonettrohre (4),
3) Herstellung des unteren Ziegelbogens (14),
4) Anbringen des Wärmeisolators auf der Einheit der Innenwand des Mantels (1), des oberen Gewölbes (2) und des unteren Bodens (3),
5) Herstellung der Abdichtungsplatte (12), wobei die Durchführungen für die Rauchrohre (10) frei gelassen werden,
6) Anbringen des unteren Teils aus Keramik der Rauchrohre (10),
7) Montage des oberen metallischen Teils der Rauchrohre (10) von oben durch Eingreifen des unteren Endes innerhalb des bereits angebrachten Keramikteils und Befestigen der Abdichtungsplatte (12),
8) Einführung der Bajonettrohre (4) in das Innere der Rauchrohre (10) und Befestigung dieser Rohre (4) und (10) im Bereich des oberen Gewölbes (2),
9) Installation der Verbindungskollektoren (A) und (S),
10) Anbringend des Katalysators im Inneren der Bajonettrohre (4).
